# EUROPÄISCHE PATENTSCHRIFT

(11) **EP 1 004 757 B1**
(45) Veröffentlichungstag und Bekanntmachung des Hinweises auf die Patenterteilung: **11.12.2002**
(21) Anmeldenummer: 98122220.1
(22) Anmeldetag: 23.11.1998
(51) Int. Cl.: F02B 23/10, F02F 3/28

(54) **Otto-Brennkraftmaschine mit direkter Kraftstoffeinspritzung**
Direct injection spark ignition engine
Moteur à combustion interne avec allumage par étincelle et injection directe

(43) Veröffentlichungstag der Anmeldung: 31.05.2000
(73) Patentinhaber: Ford Global Technologies, Inc., A subsidiary of Ford Motor Company, Dearborn, Michigan 48126 (US)
(72) Erfinder: Weiss, Edwin, 51647 Gummersbach (DE)
(74) Vertreter: Drömer, Hans-Carsten, Dipl.-Ing.

(56) Entgegenhaltungen:
- EP-A- 0 778 402
- DE-A- 19 537 028
- US-A- 4 541 377
- US-A- 5 327 864
- PATENT ABSTRACTS OF JAPAN vol. 013, no. 189 (M-821), 8. Mai 1989 & JP 01 015423 A (ISUZU MOTORS LTD), 19. Januar 1989
- PATENT ABSTRACTS OF JAPAN vol. 096, no. 005, 31. Mai 1996 & JP 08 014048 A (MITSUBISHI MOTORS CORP), 16. Januar 1996

## Beschreibung

Die Erfindung bezieht sich auf eine Otto-Brennkraftmaschine mit direkter Kraftstoffeinspritzung, der im Oberbegriff des Patentanspruches 1 erläuterten Art.

Aus EP-A-0 778 402 ist eine Otto-Brennkraftmaschine mit direkter Kraftstoffeinspritzung in einen Brennraum, der von einem in einem Zylinder aufgenommenen Kolben und einem Dachschrägen aufweisenden Zylinderkopf begrenzt ist, bekannt. Dabei weist der Kolben zumindest eine Ausnehmung und eine Erhebung auf und der Zylinderkopf hat in seinen zueinander geneigten Dachschrägen zwei Einlassöffnungen und zwei Auslassöffnungen. Ferner ist eine Zündkerze und eine seitlich angeordnete Kraftstoffeinspritzeinrichtung vorgesehen, wobei im Kolben zwei Ausnehmungen zwischen zwei mit den Giebelflächen der Dachschrägen des Zylinderkopfes Quetschflächen bildende Erhebungen angeordnet sind.

Aus der US 4 958 604 A1 ist eine Otto-Brennkraftmaschine mit direkter Kraftstoffeinspritzung in einen Brennraum bekannt, der von einem in einem Zylinder aufgenommenen Kolben und von einem Ein- und Auslaßventile, sowie zumindest eine Zündkerze und eine Kraftstoffeinspritzeinrichtung aufnehmenden Zylinderkopf begrenzt ist, wobei der Kolben zumindest eine Ausnehmung und eine Erhebung aufweist und der Zylinderkopf zwei Einlaßventile und zwei Auslaßventile in zueinander geneigten Dachschrägen sowie eine Zündkerze und eine Kraftstoffeinspritzeinrichtung aufweist.

Bei der bekannten Otto-Brennkraftmaschine mit direkter Kraftstoffeinspritzung wird bereits vorgeschlagen, daß die Einspritzeinrichtung den Kraftstoff in zwei Einspritzstrahlen bereitstellt.

Die bekannte Otto-Brennkraftmaschine mit direkter Kraftstoffeinspritzung weist hierbei den Nachteil auf, daß diesen getrennten Kraftstoffeinspritzstrahlen keine entsprechend angeordneten zwei Zündkerzen zugeordnet werden und dementsprechend kann es bei einer mit magerem Luft-Kraftstoff-Gemisch betriebenen Otto-Brennkraftmaschine zu Schwierigkeiten bei der sicheren Zündung des Luft-Kraftstoff-Gemisches kommen.

Aus der WO 95/32 362 A1 ist ein Brennraum für eine Otto-Brennkraftmaschine bekannt, bei der bereits die Anordnung von zwei Einlaßventilen und einem Auslaßventil in Verbindung mit der Anordnung von zwei Zündkerzen vorgeschlagen wird.

Über die zweckmäßige Ausgestaltung eines mit einer solchen Anordnung im Zylinderkopf zusammenwirkenden Kolbens ist nichts näher ausgesagt und auch über die Art der zweckmäßigen Zuführung des Luft-Kraftstoff-Gemisches in den Brennraum werden keine näheren Einzelheiten gegeben.

Die Aufgabe der Erfindung ist es, eine Otto-Brennkraftmaschine mit direkter Kraftstoffeinspritzung der im Oberbegriff des Patentanspruches 1 erläuterten Art derart zu verbessern, daß mit einer gezielten Kombination von zum Teil an sich bekannten Baumerkmalen eine günstige Gestaltung des Brennraumes zur Erzielung eines optimalen Verbrennungsablaufes auch bei magerem Luft-Kraftstoff-Gemisch erreicht werden kann.

Gemäß der Erfindung wird diese Aufgabe gelöst, indem bei einer Otto-Brennkraftmaschine mit direkter Kraftstoffeinspritzung, der im Oberbegriff des Patentanspruches 1 erläuterten Art, die im Kennzeichenteil des Patentanspruches 1 aufgezeigten Merkmale in Kombination angewendet werden.

Dadurch, daß im Kolben zwei Ausnehmungen zwischen zwei, mit den Zylinderkopfdachschrägen Quetschflächen bildenden Erhebungen angeordnet sind, im Zylinderkopf in den Dachschrägen einerseits zwei Einlaßöffnungen und eine Auslaßöffnung die Ausnehmungen im Kolben teilweise übergreifend angeordnet sind, zwischen den Ein- und Auslaßöffnungen zwei Zündkerzen im Außenbereich der Ausnehmungen im Kolben einragend im Zylinderkopf angeordnet sind und die Einspritzeinrichtung im Zylinderkopf mittig zum Brennraum angeordnet ist und zwei Kraftstoff in die beiden Ausnehmungen im Kolben verteilende Einspritzstrahlen bereitstellt, wird sichergestellt, daß es im Bereich der Zündkerzen zu einer guten Verwirbelung des Luft-Kraftstoff-Gemisches kommt und so für eine zuverlässige Zündung und Verbrennung des Gemisches gesorgt werden kann.

In weiteren Ansprüchen werden zweckmäßige Ausgestaltungen der Erfindung näher erläutert.

Die Erfindung wird anhand zweier in den beiliegenden Zeichnungen gezeigter Ausführungsbeispiele näher erläutert. Es zeigt:
- Fig. 1: eine Draufsicht auf einen erfindungsgemäßen Brennraum, wobei der Kolben in vollen Linien dargestellt ist, wohingegen die im Zylinderkopf befindlichen Bauteile in Strich-Punkt-Linien dargestellt sind;
- Fig. 2: einen Schnitt entlang der Linie II-II;
- Fig. 3: einen Schnitt entlang der Linie III-III in Fig. 1 mit dem Kolben in Ansaugstellung und
- Fig. 4: einen ähnlichen Schnitt wie Fig. 3 mit dem Kolben in Kompressionsstellung;
- Fig. 5: eine weitere Ausführungsform eines erfindungsgemäßen Brennraumes in Draufsicht;
- Fig. 6: eine weitere Ausführungsform eines Brennraumes gemäß der Erfindung;
- Fig. 7: einen Schnitt entlang der Linie VII-VII in Fig. 5 und
- Fig. 8: einen Schnitt entlang der Linie VIII-VIII in Fig. 6.

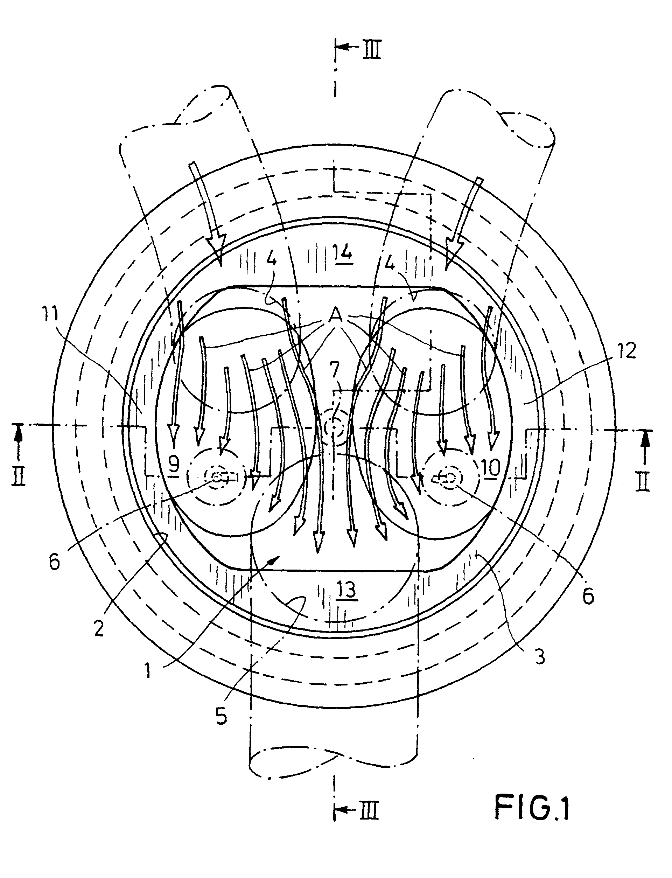

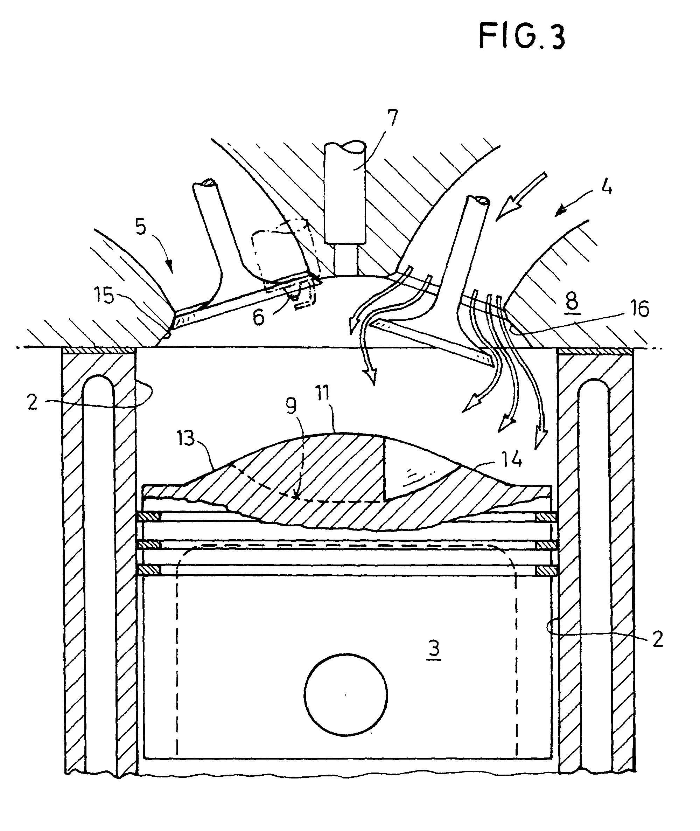

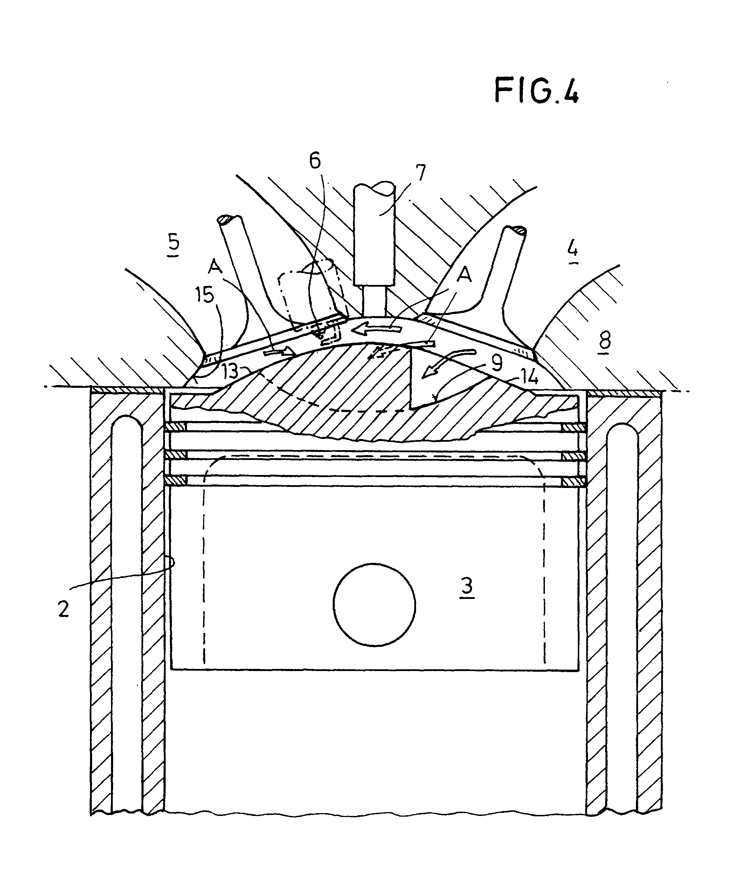

Bei den in den Figuren 1 bis 4 gezeigten Ausführungsformen einer Otto-Brennkraftmaschine mit direkter Kraftstoffeinspritzung in einen Brennraum, wird dieser Brennraum 1 von einem in einem Zylinder 2 aufgenommenen Kolben 3 und einem zwei Einlaßöffnungen 4 und eine Auslaßöffnung 5 sowie zwei Zündkerzen 6 und eine Kraftstoff-Einspritzeinrichtung 7 aufnehmenden Zylinderkopf 8 begrenzt.

Im Kolben 3 sind gemäß der Erfindung zwei Ausnehmungen 9 und 10 ausgebildet, die mit Erhebungen 11 und 12 und den Dachflächen 13 und 14 zwischen den Dachschrägen 15 und 16 des Zylinderkopfes 8 angeordnet sind.

Die Zündkerzen 6 sind hierbei zwischen den Einlaßöffnungen 4 und der Auslaßöffnung 5 so angeordnet, daß sie in die Außenbereiche der Ausnehmungen 9 und 10 einragend im Zylinderkopf liegen.

In den Figuren 1 bis 4 sind die Strömungsverhältnisse der Luft mit Pfeilen A und die Einspritzstrahlen der Kraftstoff-Einspritzeinrichtung mit Pfeilen F bezeichnet.

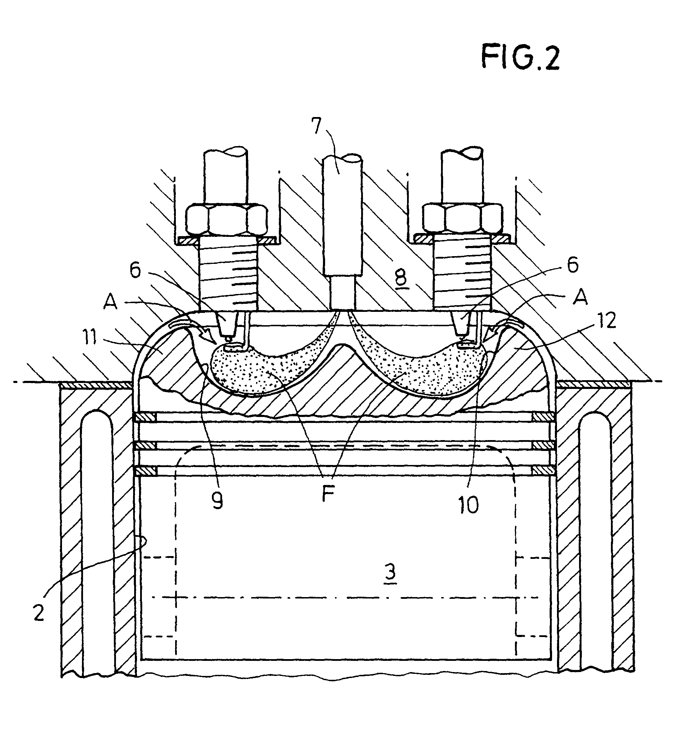

Wie insbesondere aus einer Zusammenschau der Figuren 2 und 3 sowie 4 ersichtlich wird, ergibt sich durch die Ausbildung der beiden Ausnehmungen 9 und 10 in Verbindung mit den durch die Erhebungen 11 und 12 gebildeten Quetschflächen eine Verwirbelung der in Richtung der Zündkerzen 6 eingespritzten Kraftstoff-Einspritzstrahlen F, wodurch in der Nähe der Zündkerzen 6 ein für einen zuverlässigen Verbrennungsablauf erforderliches homogenes Gemisch in stöchiometrischer Zusammensetzung erreicht werden kann.

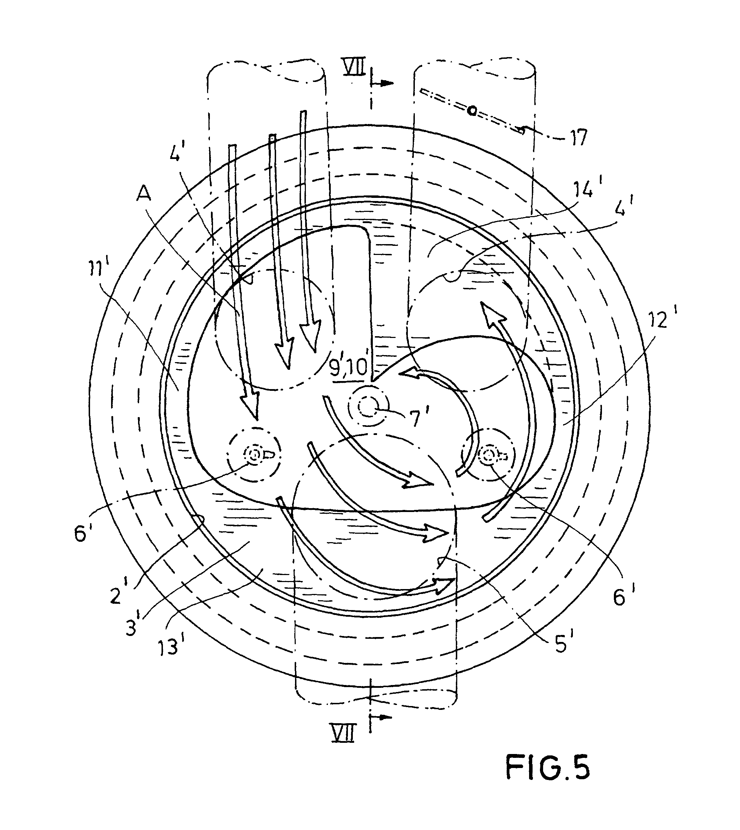

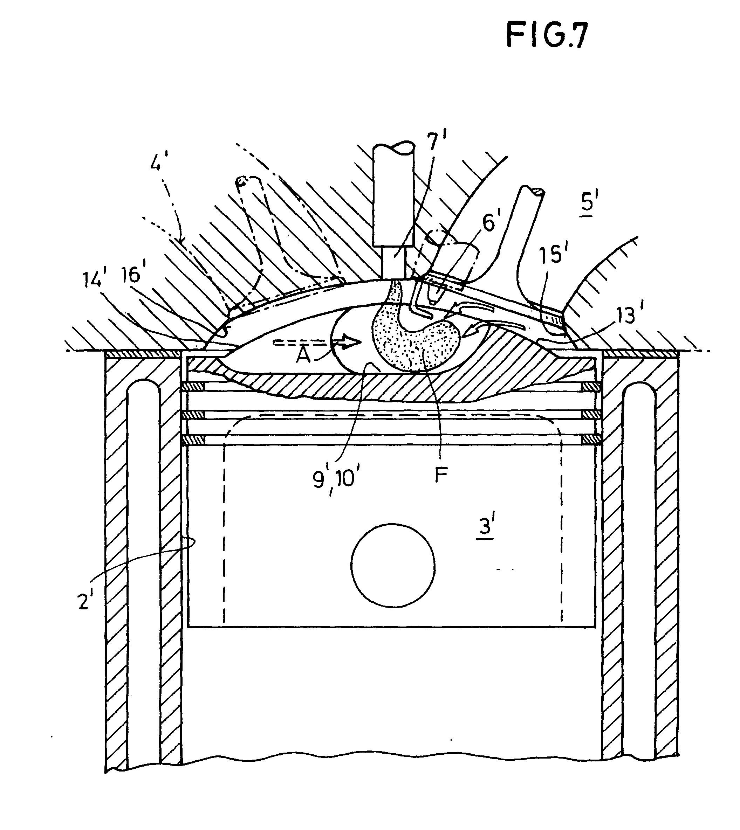

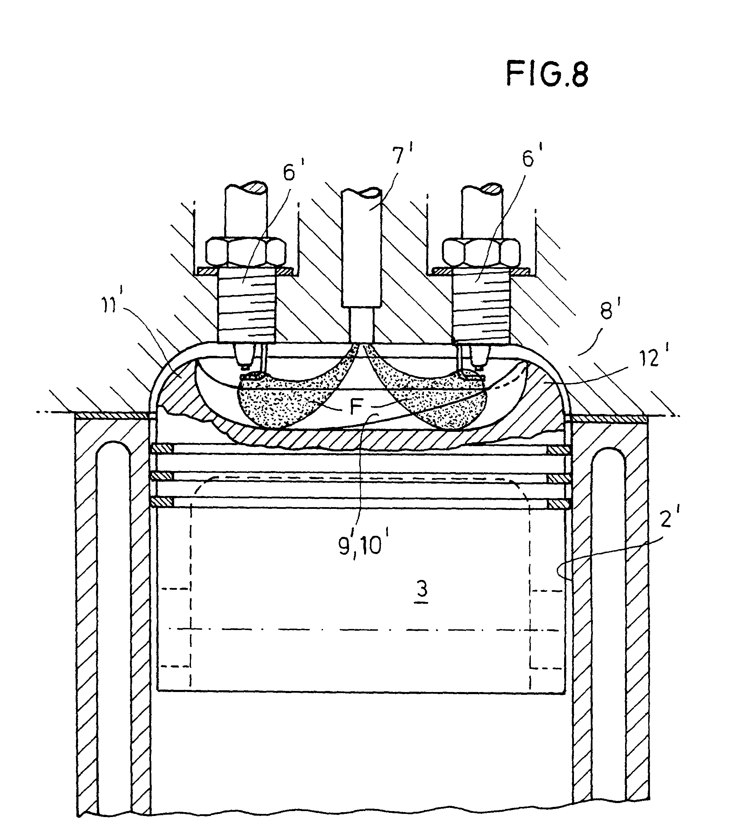

In Zusammenhang mit den Figuren 5 bis 8 wird nun eine weitere Ausführungsform der Erfindung erläutert. Gleiche Bauteile sind wieder mit den gleichen, nur mit einem Strichindex versehenen Bezugszeichen versehen.

Bei der weiteren Ausführungsform wird wieder ein Brennraum 1' durch einen in einem Zylinder 2' aufgenommenen Kolben 3' und einen Zylinderkopf 8' gebildet.

Der Zylinderkopf 8' weist wieder in an sich bekannter Weise zueinander geneigte Dachschrägen 15' und 16' auf und der Kolben 3' ist im wesentlichen mit Dachflächen 13' und 14' und mit Erhebungen 11' und 12' versehen und die im Kolben 3' angeordneten Ausnehmungen 9', 10' sind nunmehr zu einer zusammenhängenden Ausnehmung 9', 10' zusammengefaßt, die sich bis in den Bereich der einen Einlaßöffnung 4' ausdehnt.

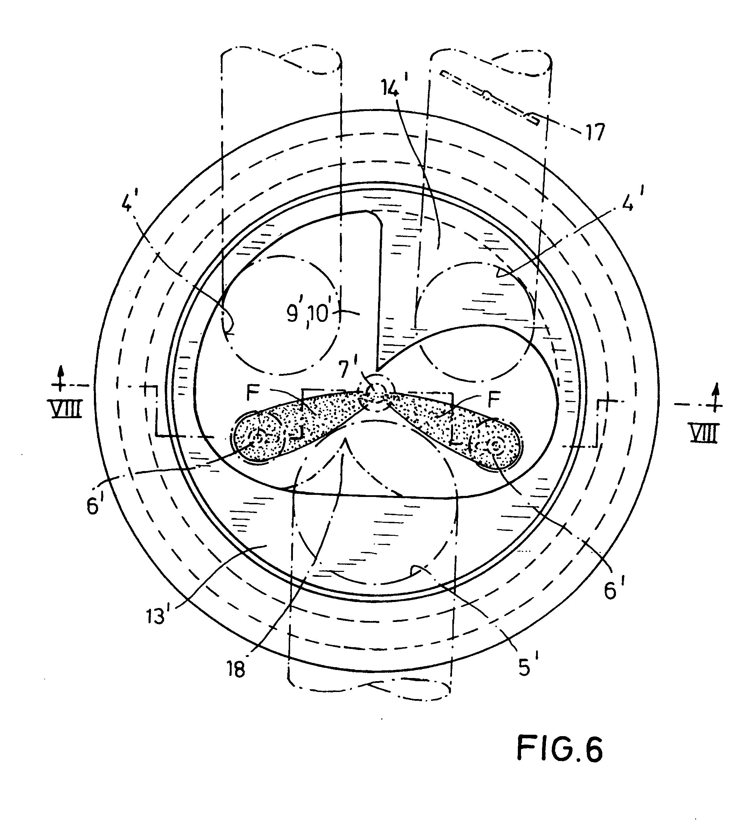

Wie aus den Ansichten der Figuren 5 und 6 ersichtlich ist, ist nunmehr einer der beiden Einlässe 4' durch eine zusätzlich vorgesehene Drosselklappe 17 im Teillastbereich geschlossen. Die Luftströmung nimmt daher den in den Figuren 5 und 6 durch die Pfeile A gebildeten Verlauf, in der sie wieder den durch die Pfeile F dargestellten Kraftstoff in Richtung auf zumindest eine der beiden Zündkerzen 6' hin mitnimmt.

## Patentansprüche

1. Otto-Brennkraftmaschine mit direkter Kraftstoffeinspritzung in einen Brennraum (1), der von einem in einem Zylinder (2) aufgenommenen Kolben (3) und einem Dachschrägen aufweisenden Zylinderkopf (8) begrenzt ist, wobei der Kolben (3) zumindest eine Ausnehmung und eine Erhebung aufweist und der Zylinderkopf (8) in seinen zueinander geneigten Dachschrägen (15, 16) zwei Einlassöffnungen (4) und zumindest eine Auslassöffnung (5) aufweist und zumindest eine Zündkerze (6) und eine Kraftstoffeinspritzeinrichtung (7) aufweist, wobei im Kolben (3) zwei Ausnehmungen (9, 10) zwischen zwei mit den Giebelflächen der Dachschrägen (15, 16) des Zylinderkopfes (8) Quetschflächen bildende Erhebungen (11, 12) angeordnet sind,
**dadurch gekennzeichnet, dass**
- im Zylinderkopf (8) in einer der Dachschrägen (15, 16) zwei Einlassöffnungen (4) und in der anderen Dachschräge eine Auslassöffnung (5) die Ausnehmungen (9, 10) im Kolben (3) teilweise übergreifend angeordnet sind,
- zwischen den Ein- und Auslassöffnungen (4, 5) zwei Zündkerzen (6) im Außenbereich der Ausnehmungen (9, 10) einragend im Zylinderkopf angeordnet sind und
- die Einspritzeinrichtung (7) im Zylinderkopf (8) mittig zum Brennraum (1) angeordnet ist und je einen, in jede der beiden Ausnehmungen (8, 9) verteilende, Kraftstoff-Einspritzstrahlen bereitstellt.

2. Otto-Brennkraftmaschine mit direkter Kraftstoffeinspritzung in einen Brennraum nach Anspruch 1,
**dadurch gekennzeichnet, dass**
- in Kolben (3') die beiden Ausnehmungen (9', 10') ineinander übergehend ausgebildet und sich zur einen Einlassöffnung (4') hin erstreckend ausgebildet sind,
- im Zylinderkopf (8') in einer der Dachschrägen (15', 16') angeordneten Einlassöffnungen (4') einer der mit dieser Einlassöffnung (4') verbundenen
- Einlasskanäle mit einer zusätzlichen Drosselklappe (17) versehen ist, die bei Teillastbetrieb geschlossen ist und
- die eine der Dachflächen (14') im Bereich der Einlassöffnung (4') abgesenkt ist.

3. Otto-Brennkraftmaschine mit direkter Kraftstoffeinspritzung in einen Brennraum nach den Ansprüchen 1 und 2,
**dadurch gekennzeichnet, dass**
- im Kolben (3'), der die zusammengefassten Ausnehmungen (9',10') aufnimmt, die Dachfläche (13'), die gegenüber der einen Einlassöffnung (4') liegt, eine in Anströmrichtung der Luft vorspringende Keilnase (18) aufweist, die zu einer Aufteilung der verwirbelten Luftströmung führt.

## Claims

1. Spark-ignition engine with direct fuel injection into a combustion chamber (1), which is bounded by a piston (3) accommodated in a cylinder (2) and by a cylinder head (8) with roof slopes, the piston (3) having at least one recess and at least one raised portion, and the cylinder head (8) having two inlet openings (4) and at least one outlet opening (5) in its roof slopes (15, 16), which slope relative to one another, and having at least one spark plug (6) and at least one fuel injection device (7), two recesses (9, 10) being arranged in the piston (3) between two raised portions (11, 12), which form squish surfaces with the gable surfaces of the roof slopes (15, 16) of the cylinder head (8), **characterized in that**
- two inlet openings (4) are arranged in one of the roof slopes (15, 16) and an outlet opening (5) is arranged in the other roof slope, in the cylinder head (8), partially overlapping the recesses (9, 10) in the piston (3),
- two spark plugs (6) projecting in in the outer region of the recesses (9, 10) are arranged in the cylinder head, between the inlet and outlet openings (4, 5), and
- the injection device (7) is arranged centrally with respect to the combustion chamber (1), in the cylinder head (8), and provides a fuel injection jet distributed into each of the two recesses (8, 9).

2. Spark-ignition engine with direct fuel injection into a combustion chamber according to Claim 1,
**characterized in that**
- the two recesses (9', 10') formed in the piston (3') merge into one another and extend towards one inlet opening (4'),
- in the cylinder head (8'), in one of the inlet openings (4') arranged in one of the roof slopes (15', 16'), one of the inlet ducts connected to this inlet opening (4') is provided with an additional throttle butterfly (17), which is closed in part-load operation and
- one of the roof surfaces (14') is lowered in the region of the inlet opening (4').

3. Spark-ignition engine with direct fuel injection into a combustion chamber according to Claims 1 and 2, **characterized in that**
- the gable surface (13') lying opposite one inlet opening (4') in the piston (3') accommodating the combined recesses (9', 10') has a wedge-shaped nose (18) which projects in the inflow direction of the air and leads to division of the swirling air flow.

## Revendications

1. Moteur à combustion interne avec allumage par étincelle et injection directe dans une chambre de combustion (1), qui est limitée par un piston (3) logé dans un cylindre (2) et une culasse de cylindre (8) présentant des pans inclinés, le piston (3) présentant au moins un évidement et un rehaussement et la culasse de cylindre (8) présentant, dans ses pans inclinés l'un par rapport à l'autre (15, 16) deux ouvertures d'admission (4) et au moins une ouverture de sortie (5) et présentant au moins une bougie d'allumage (6) et un dispositif d'injection de carburant (7), deux évidements (9, 10) étant disposés dans le piston (3) entre deux rehaussements (11, 12) formant des faces de compression avec les faces de pignon des pans inclinés (15, 16) de la culasse de cylindre (8),
**caractérisé en ce que**
- deux ouvertures d'admission (4) sont disposées dans la culasse de cylindre (8) dans l'un des pans inclinés (15, 16) et une ouverture de sortie (5) est disposée dans l'autre pan incliné, en recouvrant partiellement les évidements (9, 10) dans le piston (3),
- deux bougies d'allumage (6) sont disposées entre les ouvertures d'admission et de sortie (4, 5) dans la région extérieure des évidements (9, 10), en pénétrant dans la culasse de cylindre et
- le dispositif d'injection (7) est disposé dans la culasse de cylindre (8) au centre vers la chambre de combustion (1), et fournit à chaque fois un jet d'injection de carburant se répartissant dans chacun des deux évidements (8, 9).

2. Moteur à combustion interne avec allumage par étincelle et injection directe dans une chambre de combustion selon la revendication 1,
**caractérisé en ce que**
- dans le piston (3'), les deux évidements (9', 10') sont réalisés de manière à se prolonger l'un par l'autre et sont réalisés de manière à s'étendre vers une ouverture d'admission (4'),
- dans la culasse de cylindre (8') dans une ouverture d'admission (4') disposée dans l'un des pans inclinés (15', 16'),
- un des canaux d'admission connectés à cette ouverture d'admission (4') est pourvu d'un papillon supplémentaire (17), qui est fermé en fonctionnement en charge partielle et
- l'une des surfaces du toit (14') est abaissée dans la région de l'ouverture d'admission (4').

3. Moteur à combustion interne avec allumage par étincelle et injection directe dans une chambre de combustion selon les revendications 1 et 2,
**caractérisé en ce que**
- dans le piston (3') qui reçoit les évidements (9', 10') assemblés, la surface du toit (13'), qui se trouve contre l'une des ouvertures d'admission (4'), présente un nez en coin (18) saillant dans la direction du courant d'air, lequel conduit à une division du courant d'air tourbillonnaire.
